# EUROPEAN PATENT APPLICATION

(11) **EP 4 852 275 A1**
(43) Date of publication of application: **09.12.2026**
(21) Application number: 26171884.5
(22) Date of filing: 13.04.2026
(51) Int. Cl.: H02J 7/50, G06F 1/26, H01M 10/44, H01M 10/615, H01M 10/48, H02J 7/34

(54) **A MOBILE TERMINAL AND A METHOD THEREOF**

(30) Priority: 03.06.2025 US 202519227203
(71) Applicant: Hand Held Products, Inc., Fort Mill, SC 29707 (US)
(72) Inventor: SKVORETZ, Matthew, 28202 Charlotte (US)
(74) Representative: Haseltine Lake Kempner LLP

(57) **Abstract**

A mobile terminal is disclosed. The mobile terminal comprises at least one heating element wrapped at least partly around a backup power source and electrically coupled to a main power source, at least one sensing element coupled to or adjacent to the backup power source, and configured to generate one or more signals corresponding to a current temperature of the backup power source, a control unit configured to receive the one or more signals corresponding to the current temperature of the backup power source, determine whether the current temperature of the backup power source is below a predefined first threshold temperature, upon determining that the current temperature of the backup power source is below the predefined first threshold temperature, activate the at least one heating element either until the current temperature of the backup power source reaches a predefined second threshold temperature or until a predetermined time interval has lapsed.

## Description

### TECHNOLOGICAL FIELD

Example embodiments of the present disclosure relate generally to mobile terminals, and more particularly, to a battery management of a mobile terminal and a method thereof.

### BACKGROUND

Industrial mobile devices require "true battery hot swap" functionality, allowing battery replacement without shutting down the mobile devices or entering low power mode, often within 30 seconds. The battery replacement demands an internal power source capable of sustaining high-performance components, including CPUs, memory, radios, displays, and speakers, while the battery is being swapped. The challenge lies in integrating a compact yet powerful energy source within a thin device while ensuring reliability in extreme temperatures as low as -20°C. While hybrid super-capacitors and small lithium-ion batteries offer potential solutions for such an internal power source, they often perform poorly in cold environments, particularly below 0°C, necessitating advancements in power management and energy storage technologies. However, such hybrid super-capacitors and small lithium-ion batteries are required to be operated in temperatures as low as -10°C to -20°C, presenting significant challenges while performing hot swap in colder conditions.

The inventors identified numerous deficiencies and problems in existing technologies and processes, which are the subjects of embodiments described herein. Through applied effort, ingenuity, and innovation, many of these deficiencies and problems have been solved by developing solutions that are included in embodiments of the present disclosure, many examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a mobile terminal is disclosed. The mobile terminal comprises at least one heating element wrapped at least partly around a backup power source of the mobile terminal and electrically coupled to a main power source of the mobile terminal. Further, the mobile terminal comprises at least one sensing element coupled to or adjacent to the backup power source and configured to generate one or more signals corresponding to a current temperature of the backup power source. Further, the mobile terminal comprises a control unit communicatively coupled to the at least one heating element and the at least one sensing element, and configured to receive the one or more signals corresponding to the current temperature of the backup power source from the at least one sensing element, determine whether the current temperature of the backup power source is below a predefined first threshold temperature, and upon determining that the current temperature of the backup power source is below the predefined first threshold temperature, activate the at least one heating element either until the current temperature of the backup power source reaches a predefined second threshold temperature or until a predetermined time interval has lapsed.

In some embodiments, the control unit is further configured to deactivate the at least one heating element after the current temperature of the backup power source has reached the predefined second threshold temperature or the predetermined time interval has lapsed.

In some embodiments, the at least one sensing element corresponds to a temperature sensor. Further, the at least one sensing element is positioned on or adjacent to at least one surface of the backup power source.

In some embodiments, the predefined first threshold temperature defines a range of 0 to -10 degrees Celsius. In some embodiments, the predefined second threshold temperature defines a range of 5 to 10 degrees Celsius above the predefined first threshold temperature.

In some embodiments, the control unit is configured to determine whether the current temperature of the backup power source is below the predefined first threshold temperature in one or more conditions. In some embodiments, the one or more conditions comprise at least one of a current battery percentage of the main power source being below a predefined battery level or a time elapsed since a last hot swap of the main power source being above a predefined time threshold.

In some embodiments, the at least one heating element corresponds to a flexible printed circuit board (PCB). In some embodiments, upon activating the at least one heating element, electrical current passes through a resistive element of the flexible PCB thereby generating heat energy around the backup power source through a resistive power loss of the resistive element.

In some embodiments, the mobile terminal corresponds to at least one of a mobile device, a communication device, or a handheld computer.

In some embodiments, the backup power source corresponds to a super capacitor or a lithium ion battery.

In another example embodiment, a method is disclosed. The method comprises steps of receiving, via a control unit of a mobile terminal communicatively coupled to at least one heating element and at least one sensing element, one or more signals corresponding to a current temperature of a backup power source from at least one sensing element. Further, the mobile terminal comprises the at least one heating element wrapped at least partly around the backup power source of the mobile terminal and electrically coupled to a main power source of the mobile terminal, and the at least one sensing element coupled to or adjacent to the backup power source, and configured to generate the one or more signals corresponding to the current temperature of the backup power source. The method further comprises determining, via the control unit, whether the current temperature of the backup power source is below a predefined first threshold temperature; and activating, via the control unit, the at least one heating element either until the current temperature of the backup power source reaches a predefined second threshold temperature or until a predetermined time interval has lapsed, upon determining that the current temperature of the backup power source is below the predefined first threshold temperature.

The above summary is provided merely for purposes of summarizing some exemplary embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which are further explained within the following detailed description and its accompanying drawings.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a mobile terminal in accordance with an example embodiment of the present disclosure;
FIG. 2 illustrates an isometric view of a backup power source of the mobile terminal, at least one heating element wrapped at least partly around the backup power source, and at least one sensing element coupled to the backup power source in accordance with an example embodiment of the present disclosure;
FIG. 3 illustrates an isometric view of a backup power source of the mobile terminal, at least one heating element wrapped at least partly around the backup power source, and at least one sensing element coupled to the backup power source in accordance with another example embodiment of the present disclosure;
FIG. 4 illustrates a top view of at least one heating element of the mobile terminal in accordance with an example embodiment of the present disclosure;
FIG. 5 illustrates a graphical representation of equivalent series resistance measurements of a backup power source in accordance with an example embodiment of the present disclosure;
FIG. 6 illustrates a graphical representation of equivalent series resistance measurements of a backup power source in accordance with another example embodiment of the present disclosure; and
FIG. 7 illustrates a flowchart showing a method of the mobile terminal in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a mobile terminal. Embodiments of the present disclosure may comprise at least one heating element wrapped at least partly around a backup power source of the mobile terminal and electrically coupled to a main power source of the mobile terminal. Embodiments of the present disclosure may comprise at least one sensing element coupled to or adjacent to the backup power source and may be configured to generate one or more signals corresponding to a current temperature of the backup power source. Embodiments of the present disclosure may comprise a control unit communicatively coupled to the at least one heating element and the at least one sensing element. Further, the control unit may be configured to receive the one or more signals corresponding to the current temperature of the backup power source from the at least one sensing element, determine whether the current temperature of the backup power source is below a predefined first threshold temperature, and upon determining that the current temperature of the backup power source is below the predefined first threshold temperature, activate the at least one heating element either until the current temperature of the backup power source reaches a predefined second threshold temperature or until a predetermined time interval has lapsed.

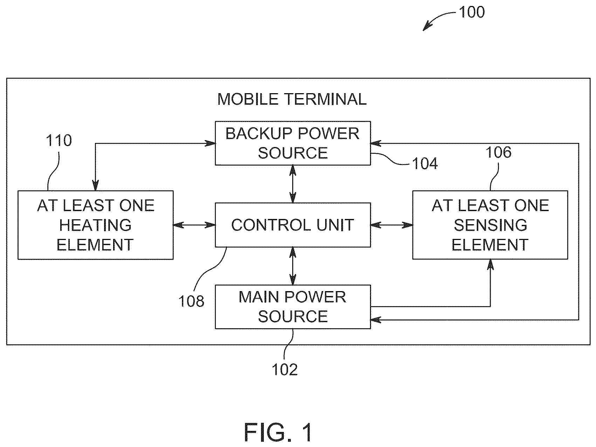

FIG. 1 illustrates a block diagram of a mobile terminal 100, in accordance with an example embodiment of the present disclosure.

In some embodiments, the mobile terminal 100 may comprise a main power source 102 and a backup power source 104. In some embodiments, the mobile terminal 100 may further comprise at least one sensing element 106, a control unit 108, and at least one heating element 110. In some embodiments, the mobile terminal 100 may be employed in various industrial applications. The industrial applications may comprise at least one of logistics, manufacturing, and other field services. In one example, the mobile terminal 100 may correspond to at least one of a mobile device, a communication device, or a handheld device. In some embodiments, the mobile terminal 100 may be employed to perform one or more operations. Further, the one or more operations may include at least one of a barcode scanning, wireless communication, and data collection.

In some embodiments, the mobile terminal 100 may be encased within a housing (not shown). In some embodiments, the housing may be configured to provide structural integrity to the mobile terminal 100 during operations. In some embodiments, the housing of the mobile terminal 100 may protect the mobile terminal 100 from various hazards that may harm the mobile terminal 100 within an industrial environment. The hazards may comprise a sudden drop from a height, collision with machineries, or exposure to chemicals. In some embodiments, the mobile terminal 100 may comprise various components (not shown). For example, the components of the mobile terminal 100 may comprise at least a display panel, a keypad, and one or more communication modules. In some embodiments, the mobile terminal 100 may further comprise the main power source 102 and a battery management module (not shown).

In some embodiments, the main power source 102 may comprise at least a rechargeable battery such as a lithium-ion battery, lithium-polymer battery, nickel-cadmium battery, lead-acid battery etc. Further, the main power source 102 may get (partially or completely) drained due to usage of the mobile terminal 100. In an instance, the main power source 102 may be swapped with another main power source when the main power source 102 gets (partially or completely) drained. Further, hot swapping of the main power source 102 with the other main power source may be performed to ensure smooth and uninterrupted operations of the mobile terminal 100. Further, the battery management module may be configured to allow handover of operations of the main power source 102 to the backup power source 104 of the mobile terminal 100 while performing hot swap of the mobile terminal 100. In one example embodiment, the mobile terminal 100 may further comprise a battery connector (not shown). In some embodiments, the battery connector of the mobile terminal 100 may be configured to enable plug-in of the main power source 102 with the mobile terminal 100. Further, the battery connector is operationally coupled with one or more electrical or electronic components of the mobile terminal 100. In some embodiments, the battery connector is configured to draw power from the main power source 102 and supply power to the one or more electrical and/or electronic components of the mobile terminal 100 thereby enabling the mobile terminal 100 to perform the one or more operations.

In some embodiments, the mobile terminal 100 may comprise the backup power source 104. In some embodiments, the backup power source 104 may be operationally coupled with the one or more electrical and electronic components of the mobile terminal 100. In some embodiments, the backup power source 104 may be configured to supply power to the one or more electrical and electronic components of the mobile terminal 100. In some embodiments, the backup power source 104 may correspond to at least a super-capacitor or a lithium ion battery. In an instance, when the main power source 102 is removed from the battery connector, then the mobile terminal 100 may be configured to draw power from the backup power source 104 to perform the one or more operations. In some embodiments, the backup power source 104 may be configured to ensure uninterrupted operations of the mobile terminal 100.

In some embodiments, the mobile terminal 100 may further comprise at least one sensing element 106. In some embodiments, the at least one sensing element 106 may be integrated within the mobile terminal 100. In one embodiment, the at least one sensing element 106 may be coupled to the backup power source 104. In another embodiment, the at least one sensing element 106 may be positioned adjacent to the backup power source 104. In some embodiments, the at least one sensing element 106 may be positioned on at least one surface of the backup power source 104. Further, the at least one sensing element 106 may be configured to measure a current temperature of the backup power source 104. Further, the at least one sensing element 106 may be configured to determine the current temperature, while the mobile terminal 100 draws power from the backup power source 104. In some embodiments, the at least one sensing element 106 may correspond to a temperature sensor. In some embodiments, the at least one sensing element 106 may be configured to generate one or more signals corresponding to the current temperature of the backup power source 104. In some embodiments, the one or more signals may correspond to one or more electrical signals each having a low voltage. In some embodiments, the at least one sensing element 106 may comprise, for example, a thermocouple, a resistance temperature detector, or a thermistor.

In some embodiments, the mobile terminal 100 may comprise the control unit 108. In some embodiments, the control unit 108 may be communicatively coupled to the at least one sensing element 106 and the at least one heating element 110. In some embodiments, the control unit 108 may include suitable logic, circuitry, and/or interfaces that are operable to execute one or more instructions stored in a memory (not shown) to perform predetermined operations. In one embodiment, the control unit 108 may be configured to decode the one or more instructions and execute the one or more instructions that are stored within the memory. The control unit 108 may be configured to execute one or more computer-readable program instructions, such as program instructions to carry out any of the one or more operations of the mobile terminal 100. Further, the control unit 108 may be implemented using one or more processor technologies known in the art such as central processing unit (CPU), field-programmable gate array (FPGA), digital signal processors (DSP), etc. Examples of the control unit 108 may comprise at least one of, one or more general purpose processors and/or one or more special purpose processors that may be designed to handle the one or more operations of the mobile terminal 100.

In some embodiments, the memory may be configured to store the one or more instructions associated with data received by the mobile terminal 100. It is apparent to a person with ordinary skill in the art that the one or more instructions stored in the memory enable the hardware of the mobile terminal 100 to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

In some embodiments, the control unit 108 may be configured to receive the one or more signals from the at least one sensing element 106. In some embodiments, the one or more signals may correspond to the current temperature of the backup power source 104. In some embodiments, the control unit 108 may be configured to receive the one or more signals, while the main power source 102 supplies power to the mobile terminal 100. In some embodiments, the control unit 108 may be configured to compare the received current temperature of the backup power source 104 with a predefined first threshold temperature. In some embodiments, the predefined first threshold temperature may define a range of, for example, 0 to -10 degree Celsius, although any suitable temperature range may be used.

In some embodiments, the control unit 108 may be configured to determine whether the current temperature of the backup power source 104 is below the predefined first threshold temperature. In some embodiments, the control unit 108 determines the current temperature of the backup power source 104 is below the predefined first threshold temperature, based at least on the comparison. In some embodiments, the control unit 108 may be configured to activate the at least one heating element 110, upon determining that the current temperature of the backup power source 104 is below the predefined first threshold temperature. In one embodiment, the control unit 108 may be configured to activate the at least one heating element 110 until the current temperature of the backup power source 104 reaches a predefined second threshold temperature. In some embodiments, the predefined second threshold temperature may define a range of, for example, 5 to 10 degrees Celsius above the predefined first threshold temperature, although any suitable range may be used. It may be noted that the predefined first and second threshold temperature ranges described herein are provided by way of example only. These ranges are not intended to be limiting, and other threshold values or ranges may be used depending on the specific application, environmental conditions, or design requirements.

In some embodiments, the first threshold temperature and the second threshold temperature may be equal. In another embodiment, the control unit 108 may be configured to activate the at least one heating element 110 until a predetermined time interval has lapsed. In some embodiments, the control unit 108 may be configured to activate the at least one heating element 110 either until the current temperature of the backup power source 104 reaches the predefined second threshold temperature or until the predetermined time interval has lapsed to prevent any error during measuring of the current temperature of the backup power source 104 through the at least one sensing element 106.

In some embodiments, the at least one heating element 110 may be wrapped partly or completely around the backup power source 104. In some embodiments, the at least one heating element 110 may correspond to a flexible printed circuit board (PCB). In some embodiments, the at least one heating element 110 may be configured to generate heat energy around the backup power source 104 upon receiving one or more activation signals from the control unit 108. In some embodiments, the control unit 108 may be configured to deactivate the at least one heating element 110 after the current temperature of the backup power source 104 has reached the predefined second threshold temperature or the predetermined time interval has lapsed.

In some embodiments, the control unit 108 may be configured to determine whether the current temperature of the backup power source 104 is below the predefined first threshold temperature in one or more conditions. Further, the one or more conditions may comprise a current battery percentage of the main power source 102 being below a predefined battery level or a time elapsed since a last hot swap of the main power source 102 being above a predefined time threshold. In one exemplary embodiment, the one or more conditions may further comprise an accidental removal of the main power source 102 from the mobile terminal 100. In some embodiments, the control unit 108 may be configured to consider occurrence of the one or more conditions to determine whether the current temperature of the backup power source 104 is below the predefined first threshold temperature.

For example: In one condition, the control unit 108 of the mobile terminal 100 may be calibrated by an operator to determine whether the current temperature of the backup power source 104 is below the predefined first threshold temperature when the at least one of current battery percentage of the main power source 102 is below 15% battery level. In another condition, the control unit 108 of the mobile terminal 100 may be calibrated by the operator to determine whether the current temperature of the backup power source 104 is below the predefined first threshold temperature when it has been more than 10 hours since a last hot swap of the main power source 102. In another condition, the control unit 108 of the mobile terminal 100 may be calibrated by the operator to determine an accidental removal of the main power source 102 due to mechanical jerks.

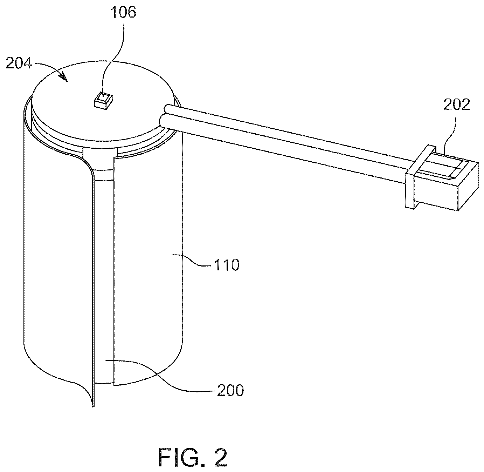

FIG. 2 illustrates an isometric view of a backup power source 200 of the mobile terminal 100, the at least one heating element 110 wrapped at least partly around the backup power source 200, and the at least one sensing element 106 coupled to the backup power source 200, in accordance with an example embodiment of the present disclosure.

In one example embodiment, the mobile terminal 100 may be integrated with a backup power source 200. In some embodiments, the backup power source 200 may correspond to the super capacitor, as illustrated in FIG. 2. In some embodiments, the backup power source 200 may be electrically coupled with the main power source 102. Further, the backup power source 200 may be configured to draw power from the main power source 102. In some embodiments, the backup power source 200 may be configured to supply power to the one or more electrical and electronic components of the mobile terminal 100 while the main power source 102 is removed from the mobile terminal 100. In some embodiments, the backup power source 200 may be constructed with any suitable shape such as, cylindrical shape, cuboidal shape, or cubical shape.

In some embodiments, the backup power source 200 may comprise one or more connectors 202. Further, the one or more connectors 202 may be configured to provide an electrical connection between the backup power source 200, main power source 102, and the one or more electrical and electronic components of the mobile terminal 100. In some embodiments, the backup power source 200 may comprise one or more surfaces. In one embodiment, the at least one sensing element 106 may be positioned on at least one surface 204 of the one or more surfaces of the backup power source 200. In another embodiment, the at least one sensing element 106 may be positioned in proximity to the at least one surface 204 of the one or more surfaces of the backup power source 200. In some embodiments, the at least one sensing element 106 may be configured to determine the current temperature of the backup power source 200. In some embodiments, the at least one sensing element 106 may be configured to generate the one or more signals corresponding to the determined current temperature of the backup power source 200.

In some embodiments, the at least one sensing element 106 may be communicatively coupled with the control unit 108. In some embodiments, the one or more connectors 202 may be configured to provide an electrical connection between the at least one sensing element 106 and the control unit 108. Further, the control unit 108 may be configured to receive the one or more signals corresponding to the determined current temperature of the backup power source 200. Further, the control unit 108 may be configured to determine whether the current temperature of the backup power source 200 is below the predefined first threshold temperature. Further, the control unit 108 may be configured to activate the at least one heating element 110 for the predefined temperature interval upon determining that the current temperature of the backup power source 200 is below the predefined first threshold temperature. In some embodiments, the control unit 108 may be configured to activate the at least one heating element 110 until the current temperature of the backup power source 200 reaches the predefined second threshold temperature or until the predetermined time interval has lapsed. In some embodiments, the one or more connectors 202 may be configured to provide an electrical connection between the at least one heating element 110 and the control unit 108. In some embodiments, the at least one heating element 110 may be wrapped partly or completely around the backup power source 200. In some embodiments, upon activating the at least one heating element 110, electrical current passes through the at least one heating element 110 thereby generating heat energy around the backup power source 200. In some embodiments, the at least one heating element 110 may be configured to generate the heat energy around the backup power source 200 to ensure that the backup power source 200 remains warm enough to function efficiently (e.g., above the first threshold temperature). In some embodiments, the at least one heating element 110 may be configured to ensure an optimum temperature of the backup power source 200.

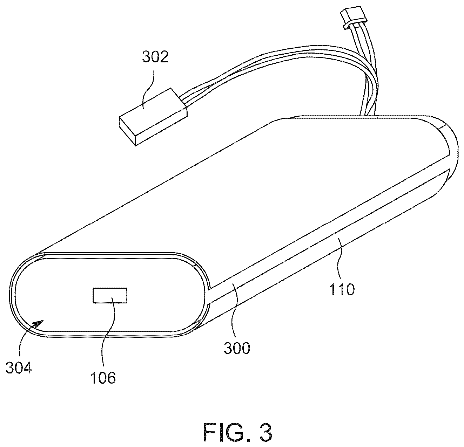

FIG. 3 illustrates an isometric view of a backup power source 300 of the mobile terminal 100, the at least one heating element 110 wrapped at least partly around the backup power source 300, and the at least one sensing element 106 coupled to the backup power source 300, in accordance with another example embodiment of the present disclosure.

In another example embodiment, the mobile terminal 100 may be integrated with a backup power source 300. In some embodiments, the backup power source 300 may correspond to the lithium ion battery. In some embodiments, the backup power source 300 may be electrically coupled with the main power source 102. Further, the backup power source 300 may be configured to draw power from the main power source 102. In some embodiments, the backup power source 300 may be configured to supply power to the one or more electrical and electronic components of the mobile terminal 100.

In some embodiments, the backup power source 300 may comprise one or more connectors 302. Further, the one or more connectors 302 may be configured to provide an electrical connection between the backup power source 300, main power source 102, and the one or more electrical and electronic components of the mobile terminal 100. In some embodiments, the backup power source 300 may comprise one or more surfaces. In one embodiment, the at least one sensing element 106 may be positioned on at least one surface 304 of the one or more surfaces of the backup power source 300. In another embodiment, the at least one sensing element 106 may be positioned in proximity to the at least one surface 304 of the one or more surfaces of the backup power source 300. In some embodiments, the at least one sensing element 106 may be configured to determine the current temperature of the backup power source 300. In some embodiments, the at least one sensing element 106 may be configured to generate the one or more signals corresponding to the determined current temperature of the backup power source 300.

In some embodiments, the at least one sensing element 106 may be communicatively coupled with the control unit 108. In some embodiments, the one or more connectors 302 may be configured to provide an electrical connection between the at least one sensing element 106 and the control unit 108. Further, the control unit 108 may be configured to receive the current temperature. Further, the control unit 108 may be configured to determine whether the current temperature of the backup power source 300 is below the predefined first threshold temperature. Further, the control unit 108 may be configured to activate the at least one heating element 110 for the predefined temperature interval until the current temperature of the backup power source 300 reaches the predefined second threshold temperature or until the predetermined time interval has lapsed, upon determining that the current temperature of the backup power source 300 is below the predefined first threshold temperature. In some embodiments, the at least one heating element 110 may be wrapped partly or completely around the backup power source 300. In some embodiments, the at least one heating element 110 may be configured to generate the heat energy around the backup power source 300 to ensure that the backup power source 300 remains warm. In some embodiments, the at least one heating element 110 may be configured to ensure an optimum temperature of the backup power source 300. In some embodiments, the one or more connectors 302 may be configured to provide an electrical connection between the at least one heating element 110 and the control unit 108.

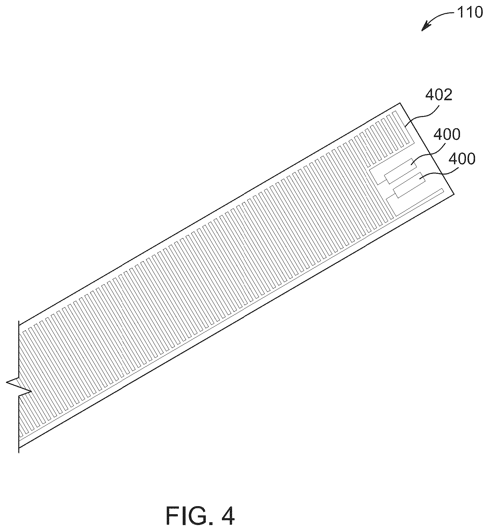

FIG. 4 illustrates a top view of the at least one heating element 110 of the mobile terminal 100, in accordance with an example embodiment of the present disclosure. FIG. 4 is described in conjunction with FIGS. 1-3.

In some embodiments, the at least one heating element 110 may be electrically coupled with the main power source 102. In some embodiments, the at least one heating element 110 may be mechanically coupled with the backup power source 104. Further, the at least one heating element 110 may be electrically isolated from the backup power source 104. In one example embodiment, the at least one heating element 110 may pull power from the main power source 102 or the backup power source 104. In some embodiments, the at least one heating element 110 may correspond to a flexible printed circuit board (PCB). In some embodiments, the at least one heating element 110 may comprise a pair of terminals 400. In some embodiments, the pair of terminals 400 may be configured to create an electrical connection between the at least one heating element 110 and the main power source 102. In some embodiments, the at least one heating element 110 may be configured to generate heat energy around the backup power source 104 upon receiving one or more activation signals from the control unit 108. In some embodiments, the at least one heating element 110 may comprise a resistive element 402. In some embodiments, the resistive element 402 may be disposed over the at least one heating element 110. In one example embodiment, the resistive element 402 may correspond to at least one of copper, aluminum, nickel etc. In some embodiments, upon activating the at least one heating element 110, electrical current passes through the resistive element 402 of the at least one heating element 110 (i.e. the flexible PCB) thereby generating heat energy around the backup power source 104 through a resistive power loss of the resistive element 402.

In some embodiments, the at least one heating element 110 may be configured to generate the heat energy around the backup power source 104 to ensure that the backup power source 104 remains warm and delivers a necessary peak current value(s) required for operations of the mobile terminal 100. In some embodiments, the at least one heating element 110 may be configured to ensure an optimum temperature of the backup power source 104. Further, the optimum temperature of the backup power source 104 may enable a stable hot swap performance of the mobile terminal 100. In some embodiments, the control unit 108 may be configured to deactivate the at least one heating element 110 after the current temperature of the backup power source 104 has reached the predefined second threshold temperature or the predetermined time interval has lapsed.

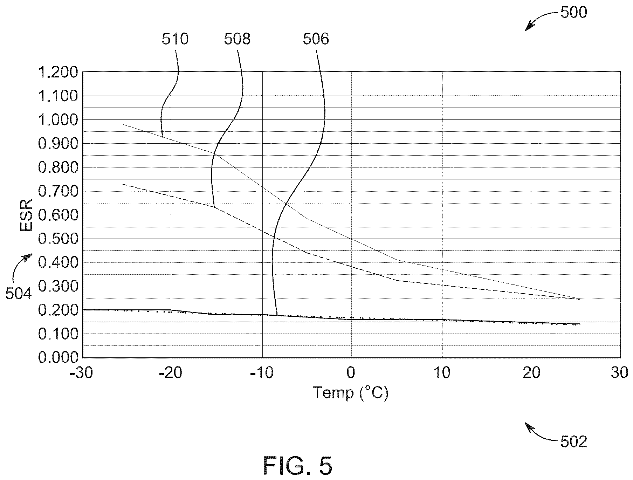

FIG. 5 illustrates a graphical representation 500 of equivalent series resistance measurements of a backup power source 104, in accordance with an example embodiment of the present disclosure.

In some embodiments, the graphical representation 500 may represent equivalent series resistance (ESR) variations of the backup power source 104 (e.g., a 200 farad hybrid Lithium-Ion capacitor (LIC)) at different temperatures. In some embodiments, the graphical representation 500 may comprise an X-axis 502 and a Y-axis 504. In some embodiments, the X-axis 502 may represent temperature (°C), ranging from -30°C to 30°C. In some embodiments, the y-axis 504 represents ESR (Ω), ranging from 0.000 ohms to 1.200 ohms. In some embodiments, the graphical representation 500 may comprise a first trend 506, a second trend 508, and a third trend 510. In some embodiments, the first trend 506 may be configured to represent behavioral characteristics of the backup power source 104 when measured at different loads and at different temperatures. In some embodiments, the second trend 508 may be configured to represent behavioral characteristics of the backup power source 104 after 30 milliseconds at different temperatures. In some embodiments, the third trend 510 may be configured to represent behavioral characteristics of the backup power source 104 after 100 milliseconds at different temperatures. In some embodiments, the graphical representation 500 may state that the ESR increases as the temperature decreases. As illustrated in FIG. 5, at higher temperatures (25°C to 0°C), ESR values remain relatively low. Further, as the temperature drops below 0°C, the ESR increases significantly as illustrated by the first trend 506, the second trend 508, and the third trend 510.

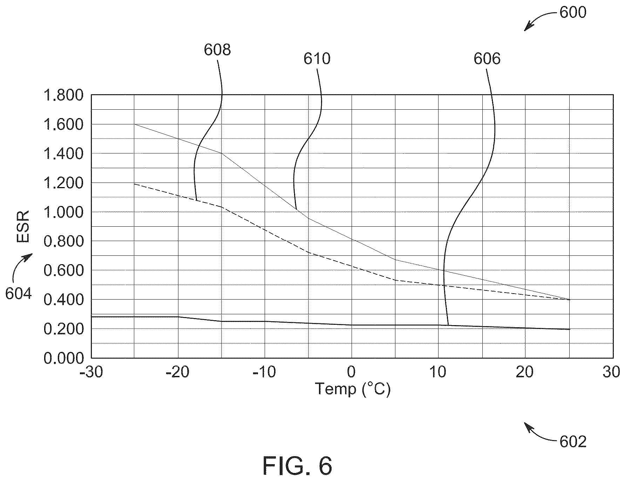

FIG. 6 illustrates a graphical representation 600 of equivalent series resistance measurements of a backup power source 104, in accordance with another example embodiment of the present disclosure.

In some embodiments, the graphical representation 600 may represent equivalent series resistance (ESR) variations of the backup power source 104 (e.g., a 110 farad hybrid Lithium-Ion capacitor (LIC)) at different temperatures. In some embodiments, the graphical representation 600 may comprise an X-axis 602 and a Y-axis 604. In some embodiments, the X-axis 602 may represent temperature (°C), ranging from -30°C to 30°C. In some embodiments, the y-axis 604 represents ESR (Ω), ranging from 0.000 ohms to 1.800 ohms. In some embodiments, the graphical representation 600 may comprise a first trend 606, a second trend 608 and a third trend 610. In some embodiments, the first trend 606 may be configured to represent behavioral characteristics of the backup power source 104 when measured at different loads and at different temperatures. In some embodiments, the second trend 608 may be configured to represent behavioral characteristics of the backup power source 104 after 30 milliseconds at different temperatures. In some embodiments, the third trend 610 may be configured to represent behavioral characteristics of the backup power source 104 after 100 milliseconds at different temperatures. In some embodiments, the graphical representation 600 may state that the ESR increases as the temperature decreases. As illustrated in FIG. 6, at higher temperatures (25°C to 0°C), ESR values remain relatively low. Further, as the temperature drops below 0°C, the ESR increases significantly as illustrated by the first trend 606, the second trend 608, and the third trend 610.

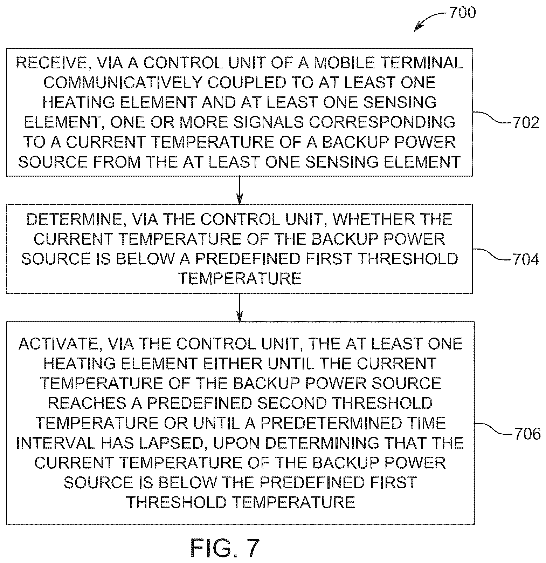

FIG. 7 illustrates a flowchart showing a method 700 of the mobile terminal 100, in accordance with an example embodiment of the present disclosure.

At operation 702, the control unit 108 of the mobile terminal 100 may be communicatively coupled to the at least one heating element 110 and the at least one sensing element 106. Further, the control unit 108 may be configured to receive the one or more signals corresponding to the current temperature of the backup power source 104 from the at least one sensing element 106. In some embodiments, the control unit 108 may be configured to receive the one or more signals, while the backup power source 104 supplies power to the mobile terminal 100. In one embodiment, the at least one sensing element 106 may be coupled to the backup power source 104. In another embodiment, the at least one sensing element 106 may be positioned adjacent to the backup power source 104. Further, the at least one sensing element 106 may be configured to measure a current temperature of the backup power source 104. Further, the at least one sensing element 106 may be configured to determine the current temperature, while the mobile terminal 100 draws power from the backup power source 104.

In some embodiments, the mobile terminal 100 may comprise the at least one heating element 110 and the at least one sensing element 106. In some embodiments, the at least one heating element 110 may be wrapped partly or completely around the backup power source 104 of the mobile terminal 100 and electrically coupled to the main power source 102 of the mobile terminal 100. In some embodiments, the at least one sensing element 106 may be coupled to or adjacent to the backup power source 104 and may be configured to generate the one or more signals corresponding to the current temperature of the backup power source 104.

For example, a mobile terminal 100 may be designed to be operated in a cold warehouse environment. The mobile terminal 100 comprises at least one sensing element 106 (e.g. a temperature sensor) placed near or on a backup power source 104 of the mobile terminal 100 (e.g., a backup battery). As the mobile terminal 100 draws power from the main power source 102 (e.g. a main battery) to operate, for example, a barcode scanning and data processing functions, the at least one sensing element 106 continuously monitors a current temperature of the backup power source 104 to ensure that the backup power source 104 does not get too cold to effectively provide backup power when the main power source 102 is being swapped with another main power source. Further, the at least one sensing element 106 is communicatively coupled with a control unit 108 of the mobile terminal 100. Further, the at least one sensing element 106 constantly sends temperature readings to the control unit 108 of the mobile terminal 100.

At operation 704, the control unit 108 may be configured to determine whether the current temperature of the backup power source 104 is below the predefined first threshold temperature. In some embodiments, the control unit 108 may be configured to compare the received current temperature of the backup power source 104 with the predefined first threshold temperature to determine whether the current temperature of the backup power source 104 is below the predefined first threshold temperature. In some embodiments, the predefined first threshold temperature may define a range of 0 to -10 degree Celsius. In some embodiments, the control unit 108 may be configured to determine whether the current temperature of the backup power source 104 is below the predefined first threshold temperature in the one or more conditions. Further, the one or more conditions may comprise the current battery percentage of the main power source 102 being below the predefined battery level or the time elapsed since the last hot swap of the main power source 102 being above the predefined time threshold.

For example, during an operation in sub-zero conditions, such as in a cold storage facility. The at least one sensing element 106 measures a current temperature of the backup power source 104 as -10°C. The control unit 108 compares the measured temperature, (i.e. - 10°C), with a predefined first threshold temperature of 0°C. Further, the control unit 108 of the mobile terminal 100 determines whether heating of the backup power source 104 is required or not.

At operation 706, the control unit 108 may be configured to activate the at least one heating element 110, upon determining that the current temperature of the backup power source 104 is below the predefined first threshold temperature. In one embodiment, the control unit 108 may be configured to activate the at least one heating element 110 until the current temperature of the backup power source 104 reaches a predefined second threshold temperature. In some embodiments, the predefined second threshold temperature may define a range of 5 to 10 degrees Celsius above the predefined first threshold temperature. In another embodiment, the control unit 108 may be configured to activate the at least one heating element 110 until a predetermined time interval has lapsed. In some embodiments, the control unit 108 may be configured to activate the at least one heating element 110 either until the current temperature of the backup power source 104 reaches the predefined second threshold temperature or until the predetermined time interval has lapsed.

In some embodiments, the at least one heating element 110 may be wrapped partly or completely around the backup power source 104. In some embodiments, the at least one heating element 110 may be configured to generate the heat energy around the backup power source 104 to ensure that the backup power source 104 remains warm. In some embodiments, the at least one heating element 110 may be configured to ensure an optimum temperature of the backup power source 104.

For example, the control unit 108 activates at least one heating element 110 wrapped partly or completely around the backup power source 104 until the current temperature of the backup power source 104 reaches a predefined second threshold temperature of 10°C or until a predetermined time interval of 5 minutes. The at least one heating element 110 generates heat to warm up the backup power source 104. The at least one heating element 110 ensures an optimum temperature of the backup power source 104. The optimum temperature of the backup power source 104 enables a stable hot swap performance of the mobile terminal 100.

For example, the control unit 108 activates at least one heating element 110 wrapped partly or completely around the backup power source 104 until a predetermined time interval of 5 minutes. The at least one heating element 110 generates heat to warm up the backup power source 104. The at least one heating element 110 ensures an optimum temperature of the backup power source 104. The optimum temperature of the backup power source 104 enables a stable hot swap performance of the mobile terminal 100. Additionally, the control unit 108 is configured to deactivate the at least one heating element 110 if the current temperature of the backup power source 104 reaches the predefined second threshold of 10°C, or after a predetermined time interval has lapsed.

The present disclosure enhances operation and efficiency of the mobile terminal 100 by incorporating the at least one heating element 110 for the backup power source 104. Embodiments of the present invention may enable precise control over a heating process of the backup power source 104, ensuring that the backup power source 104 operates within an optimal temperature range. Embodiments of the present invention may allow the mobile terminal 100 to actively monitor the current temperature of the backup power source 104 through the at least one sensing element 106. Embodiments of the present invention may ensure an optimum temperature of the backup power source 104 through the at least one heating element 110. Embodiments of the present invention may enable a stable hot swap performance of the mobile terminal 100 in a cold environment.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A mobile terminal comprising:
at least one heating element wrapped at least partly around a backup power source of the mobile terminal and electrically coupled to a main power source of the mobile terminal;
at least one sensing element coupled to or adjacent to the backup power source, and configured to generate one or more signals corresponding to a current temperature of the backup power source; and
a control unit communicatively coupled to the at least one heating element and the at least one sensing element, wherein the control unit is configured to:
receive the one or more signals corresponding to the current temperature of the backup power source from the at least one sensing element;
determine whether the current temperature of the backup power source is below a predefined first threshold temperature; and
upon determining that the current temperature of the backup power source is below the predefined first threshold temperature, activate the at least one heating element either until the current temperature of the backup power source reaches a predefined second threshold temperature or until a predetermined time interval has lapsed.

2. The mobile terminal of claim 1, wherein the control unit is further configured to deactivate the at least one heating element after the current temperature of the backup power source has reached the predefined second threshold temperature or the predetermined time interval has lapsed.

3. The mobile terminal of claim 1, wherein the at least one sensing element corresponds to a temperature sensor; and
wherein the at least one sensing element is positioned on or adjacent to at least one surface of the backup power source.

4. The mobile terminal of claim 1, wherein the control unit is configured to determine whether the current temperature of the backup power source is below the predefined first threshold temperature in one or more conditions.

5. The mobile terminal of claim 4, wherein the one or more conditions comprise at least one of a current battery percentage of the main power source being below a predefined battery level or a time elapsed since a last hot swap of the main power source being above a predefined time threshold.

6. The mobile terminal of claim 1, wherein the at least one heating element corresponds to a flexible printed circuit board (PCB).

7. The mobile terminal of claim 6, wherein, upon activating the at least one heating element, electrical current passes through a resistive element of the flexible PCB thereby generating heat energy around the backup power source through a resistive power loss of the resistive element.

8. The mobile terminal of claim 1, wherein the mobile terminal corresponds to at least one of a mobile device, a communication device, or a handheld computer, and the backup power source corresponds to a super capacitor or a lithium ion battery.

9. A method comprising:
receiving, via a control unit of a mobile terminal communicatively coupled to at least one heating element and at least one sensing element, one or more signals corresponding to a current temperature of a backup power source from the at least one sensing element, wherein the mobile terminal comprises:
the at least one heating element wrapped at least partly around the backup power source of the mobile terminal and electrically coupled to a main power source of the mobile terminal; and
the at least one sensing element coupled to or adjacent to the backup power source, and configured to generate the one or more signals corresponding to the current temperature of the backup power source;
determining, via the control unit, whether the current temperature of the backup power source is below a predefined first threshold temperature; and
activating, via the control unit, the at least one heating element either until the current temperature of the backup power source reaches a predefined second threshold temperature or until a predetermined time interval has lapsed, upon determining that the current temperature of the backup power source is below the predefined first threshold temperature.

10. The method of claim 9, further comprising deactivating, via the control unit, the at least one heating element after the current temperature of the backup power source has reached the predefined second threshold temperature or the predetermined time interval has lapsed.

11. The method of claim 9, wherein the at least one sensing element corresponds to a temperature sensor; and
wherein the at least one sensing element is positioned on or adjacent to at least one surface of the backup power source.

12. The method of claim 9, wherein the control unit is configured to determine whether the current temperature of the backup power source is below the predefined first threshold temperature in one or more conditions.

13. The method of claim 12, wherein the one or more conditions comprise at least one of a current battery percentage of the main power source being below a predefined battery level or a time elapsed since a last hot swap of the main power source being above a predefined time threshold.

14. The method of claim 9, wherein the at least one heating element corresponds to a flexible printed circuit board (PCB).

15. The method of claim 14, wherein upon activating the at least one heating element, electrical current passes through a resistive element of the flexible PCB thereby generating heat energy around the backup power source through a resistive power loss of the resistive element.
